# EUROPEAN PATENT APPLICATION

(11) **EP 4 726 328 A1**
(43) Date of publication of application: **15.04.2026**
(21) Application number: 24206165.3
(22) Date of filing: 11.10.2024
(51) Int. Cl.: G01C 21/00, B60W 50/00

(54) **METHODS AND SYSTEMS FOR PREFETCHING ONLINE MAP DATA DURING A DRIVE OF A VEHICLE**

(71) Applicant: TomTom Navigation B.V., 1011 AC Amsterdam (NL)
(72) Inventor: NOISTERNIG, Michael Kurt, 1011 AC Amsterdam (NL); SUN, Rui, 1011 AC Amsterdam (NL); VAN DER MOST, Robertus Adrianus Jacobus, 1011 AC Amsterdam (NL); LÁSZLÒ, Milán Károly, 1011 AC Amsterdam (NL)
(74) Representative: Bardehle Pagenberg Partnerschaft mbB Patentanwälte Rechtsanwälte

(57) **Abstract**

The present invention relates to a computer-implemented method (300) for prefetching map data for a drive of a vehicle without route guidance. The method comprises obtaining (310) first map data (110) comprising first map tiles (110a-110i), the first map data (110) relating to a geographic area, the geographic area including a current position (120) of the vehicle. The method (300) further comprises determining (320) a first predicted path (130) for the vehicle based on the first map data (110) and the current position (120) of the vehicle and determining (330), based on the first map data (110) and the first predicted path (130), an indication (140) of a further trajectory of the vehicle. In addition, the method (300) comprises obtaining (340), based on the indication (140), second map data (150) comprising at least one second map tile (isoa-isoh).

## Description

### Field of the invention

Described herein are a computer-implemented method for prefetching map data during a drive of a vehicle, a system comprising a control unit to perform said method, a corresponding computer program and a vehicle comprising said system and/or a computer to carry out said method.

### Technical background

Providing drivers of a vehicle and/or the vehicle itself with digital information, e.g., map information, during a drive is at the heart of driver assistance technology. A challenge herein is that the memory capacity of the vehicle is bounded, e.g., bounded by the available space and/or the intended cost. Furthermore, map information stored in-vehicle may become outdated, which is particularly disadvantageous for some more advanced client navigation applications, e.g., map matching, advanced driver-assistance systems (ADAS) and/or electronic horizons. Some of these applications are therefore now adapted for using, for at least some of the functionality, online map data. Using online map data means that the relevant map data is not (or at least not all) stored locally in the vehicle, but the vehicle obtains the relevant map data on demand from a server and/or a cloud storage via a mobile network.

However, using such online map data may require significant bandwidth/network usage, which may incur undesirable costs. Furthermore, such online map data-based technology is vulnerable to intermittent network connectivity loss which can significantly degrade the output of client navigation applications or, if the network connectivity loss persists, can render the client navigation applications inoperable.

One proposed apparent solution for ensuring sufficient map data is available is to download all map data within a certain radius around the current position of the vehicle. However, this unselective downloading of map data from the server and/or cloud storage requires the download of huge data volume, resulting in a high network usage, rendering this approach disadvantageous. Furthermore, if sensitivity to intermittent network connectivity loss is to be avoided, this radius would need to be increased even further, with the area (and thus data volume) increasing accordingly (in fact, quadrati-cally).

Therefore, there is a need for an improved method for prefetching (online) map data, addressing at least some of the above-described disadvantages and further improving other aspects.

### Summary of the invention

A first aspects relates to a computer-implemented method for prefetching map data for a drive of a vehicle without route guidance. It is noted for completeness that pre-fetching data for a drive of the vehicle without route guidance may also be performed during a drive in which a user is following a route, in which case data is prefetched which takes into account potential deviations from a route guidance. The method comprises obtaining first map data comprising first map tiles, the first map data relating to a geographic area, the geographic area including a current position of the vehicle and determining a first predicted path for the vehicle based on the first map data and the current position of the vehicle. In addition, the method comprises determining, based on the first map data and the first predicted path, an indication of a further trajectory of the vehicle and obtaining, based on the indication, second map data comprising at least one second map tile.

Generally, a drive may comprise any action that can be associated to a travel. For example, a drive may comprise driving with a vehicle on a street and/or path. In addition, or alternatively, a drive may further comprise an idle vehicle, e.g., a vehicle with zero velocity. In particular, a drive may comprise a halt during a travel, e.g., halting due to traffic lights.

A route guidance may comprise a predefined route. For example, the predefined route may connect an initial and/or current position of the vehicle and a target position of the vehicle. The target position may be based on a request and/or command of a user, e.g. a driver of the vehicle. In general, the route guidance may dynamical, e.g., the predefined route between the initial and/or current position and the target position may vary during the drive of the vehicle. For example, the predefined route may vary at least partially based on traffic that is associated with the predefined route, e.g., current traffic and/or traffic jam. The predefined route may be varied such that the varied route still connects the initial and/or current position of the vehicle and the target position.

As mentioned, the proposed method may also be useful to anticipate potential deviations from a route. Deviating from a route guidance may comprise that the vehicle deviates from the predefined route. In addition, or alternatively, deviating from the route guidance may comprise that the vehicle deviates from the varied route. For example, the driver may deviate from the predefined and/or varied route based on an event, e.g., a sudden traffic jam and/or a roadblock and/or some personal motive. In other words, deviating from route guidance may comprise that the vehicle follows a path that is not part of the planned, e.g., preconfigured and/or varied, route.

Obtaining the first map data may comprise prefetching the first map data from a server and/or a cloud storage but may additionally or alternately comprise accessing data that was previously obtained and stored, from an in-vehicle storage. In addition, or alternatively, obtaining the first map data may comprise accessing map data associated with the route guidance. The first map data may relate to a geographic area, wherein the geographic area includes the current position of the vehicle. Generally, the current position of the vehicle may be based on a location sensor, e.g., a GPS sensor. The first map data usually comprises map tiles. For example, the map tiles may comprise a substantially rectangular and/or quadratic shape. For example, the shape and/or the size of the map tiles may be configured such that the map tiles are compatible e.g., the boundaries of the map tiles may be compatible. In particular, the map tiles may comprise at least partially connected map tiles, e.g., adjacent map tiles.

Generally, each of the map tiles may be associated with a road network which may be represented as a graph comprising nodes and arcs, preferably directed arcs, connecting these nodes. Specifically, a node of the graph may correspond to a respective geographic location within a respective geographic area and each arc, preferably a directed arc, may correspond to a navigable element between two nodes, e.g., between two respective geographic locations. In particular, a navigable element may comprise one or more roads, or parts thereof.

For example, each map tile may comprise a road network for the respective geographic area. In some embodiments, at least a part of the first map tiles may comprise a three-dimensional resolution of the respective road network and/or geographic area. The map tiles may comprise multiple layers, and obtaining the first map data may then comprise obtaining at least one of the layers of the corresponding map tiles.

The first predicted path for the vehicle may be determined based on the first map data and the current position of the vehicle. In addition, the first predicted path for the vehicle may be determined based on a heading and/or at least a part of a trace. A trace, in this context, comprises a series of time-stamped previous positions of the vehicle. In general, the first predicted path may comprise a path that the vehicle is expected most likely to follow during the drive without route-guidance. The first predicted path may also comprise at least one sub-path representing at least one most likely deviation from a predicted route being followed by a vehicle.

Generally, determining the first predicted path may comprise determining a "horizon" based on the first map data and the current position of the vehicle. For example, the "horizon" may be determined in a manner similar to that performed by a horizon provider system, e.g., the horizon provider system disclosed in TomTom's WO 2014/068094 A1. However, to determine a horizon of a desired length (or which will cover a desired travel time), it is necessary to have access to sufficient map data; determining the first predicted path is therefore limited by the first map data.

The indication of the further trajectory of the vehicle is determined based on the first map data and the first predicted path. Generally, the indication of the further trajectory may comprise an indication of a possible future driving direction of the vehicle. In particular, the indication of the further trajectory may extend beyond an end point of the first predicted path, e.g., the indication of the further trajectory may comprise information about a possible future drive of the vehicle going beyond the first predicted path. For example, the indication of the further trajectory may comprise an indication of a future driving direction which at least partially extends beyond the first map data. In other words, the indication of the further trajectory may comprise an indication into which direction the vehicle may travel outside of the available map data.

Obtaining second map data comprising at least one second map tile based on the indication may comprise prefetching the second map data from a server and/or a cloud storage. Generally, obtaining the second map data may be further based on the first map data. For example, the second map data may extend the first map data at least into a direction indicated by the indication of the further trajectory. For example, at least one of the second map tiles may be adjacent to a map tile of the first map tiles. In particular, the second map data may be compatible with the first map data. In particular, being compatible with the first map data may comprise that the first map data and the second map data can be combined, e.g., combined such that their combination covers an at least partially connected geographic area.

Obtaining the second map data based on the indication of a further trajectory makes it possible to obtain further map information only for a region most likely to be relevant for the various client navigation applications to function, and thus minimize the network data uses. Furthermore, in some cases, obtaining the second map data may further enable these applications to keep functioning without quality degradations in the presence of intermittent network connectivity loss. In particular, determining the first predicted path and the indication of the further trajectory may allow not only for obtaining the specific map data required to determine the horizon as required by client navigation applications, but may further allow for anticipating which further map data will likely be needed in the future as the vehicle keeps moving. Thus, obtaining the second map data in this more discriminating matter makes more efficient use of the available bandwidth and/or storage space, and may further minimize the latency of client navigation applications, while maximizing the robustness to temporary network connectivity loss and hereby optimizing the customer satisfaction.

In some embodiments, the indication may comprise a direction. In addition, or alternatively, the indication may comprise a geometry. In addition, or alternatively, the indication may comprise a length and/or a width.

For example, the indication may comprise a direction of a possible future driving direction of the vehicle extending the first predicted path. In particular, the direction may be such as to comprise a possible future driving direction of the vehicle going beyond the first map data, e.g., indicating a driving direction outside of the available first map data. Generally, the indication may comprise an area. For example, the indication may comprise a surface, e.g., a two-dimensional surface. In particular, the indication may comprise a two-dimensional surface when the first map data comprises map tiles comprising a two-dimensional resolution of the respective road network and/or geographic area. In addition, or alternatively, the indication may comprise a volume. For example, the indication may comprise a volume when the first map data comprises map tiles comprising a three-dimensional resolution of the respective road network and/or geographic area. In some embodiments, the indication may be one-dimensional.

The geometry of the indication may comprise a shape of the indication. In addition, or alternatively, the indication may comprise a length and/or a width. For example, the extend by which the indication goes beyond the first map data may be based on the length of the indication. In addition, or alternatively, the width of the indication may at least partially depend on the geometry of the indication. For example, the width of the indication may comprise a maximal and/or average diameter of the indication. Specifically, for a first indication comprising a first geometry, a first width may be associated with the first indication, e.g., a first rule for computing and/or associating the first width and for a second indication comprising a second geometry, a second width may be associated with the second indication, e.g., a second rule for computing and/or associating the second width.

In some embodiments, the length and/or the width may be dynamical, e.g., the length and/or the width may vary during the drive of the vehicle. Generally, the geometry and/or length and/or width of the indication may at least partially depend on an uncertainty associated with the indication and/or the end point of the first predicted path. For example, if the uncertainty associated with the indication and/or end point is high, the width of the indication may be large. Specifically, a large width of the indication may result in obtaining more second map tiles.

Specifically, the geometry of the indication may comprise a line, e.g., a straight line. For example, the line may comprise a length and/or a direction. A line comprising a length and a direction may comprise a vector. In addition, or alternatively, the geometry of the indication may comprise a rectangle and/or a circle and/or an ellipse and/or a triangle and/or a tear drop.

For example, the triangle and/or the tear drop may be oriented and/or arranged such as to open into a direction extending beyond the first map data. In other words, the triangle and/or the tear drop may be oriented and/or arranged such as to broaden a direction extending beyond the first map data. For example, an edge of the triangle and/or the tear drop may be located in a vicinity of the end point of the first predicted path. In addition, or alternatively, the geometry of the indication may comprise an ellipse and/or a circle. For example, the ellipse and/or circle may be oriented and/or arranged such that a centre of the ellipse and/or circle is located in a vicinity of the end point of the first predicted path. Specifically, the centre of the ellipse and/or circle may essentially coincide with the end point of the first predicted path. Specifically, the radius of the circle may be based on an uncertainty associated with the first predicted path, particularly the end point of the first predicted path. For example, the larger the uncertainty the larger the radius.

In some embodiments, the ellipse may be located such that a semi-major axis of the ellipse comprises a component parallel to the direction extending beyond the first map data. For example, the semi-major axis of the ellipse may be essentially parallel to the direction extending beyond the first map data. Alternatively, the ellipse may be located such that a semi-minor axis of the ellipse comprises a component parallel to the direction extending beyond the first map data. For example, the semi-minor axis of the ellipse may be essentially parallel to the direction extending beyond the first map data. Specifically, determining the component of the semi-major axis and the semi-minor axis parallel to the direction extending beyond the first map data may be based on an uncertainty associated with the first predicted path, particularly an uncertainty associated with the end point of the first predicted path. In addition, or alternatively, the length of the semi-major axis and the semi-minor axis of the ellipse may be based on the uncertainty associated with the first predicted path. For example, if the uncertainty is large, the semi-minor axis may be essentially parallel to the direction extending beyond the first map data.

An indication comprising a direction and/or a geometry and/or a length and/or a width allow for efficiently adapting the indication to the specific situation of the vehicle, e.g., an uncertainty in the first predicted path, and thereby rendering the prefetching of specific second map data possible. By rendering the prefetching of specific second map data possible, e.g., prefetching second map data based on the direction, the length, the width and/or the geometry of the indication, the network data usage required for prefetching the second map data may be minimized.

For example, the first predicted path may extend towards a boundary of the first map data. In particular, the boundary may comprise a boundary of the first map data.

The boundary of the first map data may comprise a boundary of available map data. In other words, the boundary of the first map data may at least partially define a transit from available map data to (yet) unavailable map data. For example, the boundary of the first map data may at least partially comprise a boundary of the first map tiles. In particular, the boundary of the first map data may comprise essentially the same geometry as the boundary of the first map tiles, e.g., straight lines.

It is noted for completeness that since map data is representative of an environment on Earth, the boundaries of map tiles are technically geodesics. However, at the scales we are considering, they can be approximated by straight lines.

Determining the first predicted path may comprise determining the first predicted path such that the end point of the first predicted path is located at a distance from the boundary of the first map data. For example, the first predicted path may initially be determined at least partially based on a (intended) length of the first predicted path from the current position of the vehicle. This may for example be the length of a path required by a certain client navigation application or may be a length based on a travel time required to be covered by a certain client navigation application. However, in certain cases, the (predefined) length may be such that the determined first predicted path does not extend to the boundary of the first map data, e.g., the end point of the first predicted path is located at a distance from the boundary of the first map data. Generally, when the end point of the first predicted path is located at a distance (e.g. at a distance that is more than a predefined threshold/minimum distance) from the boundary of the first map data, the first predicted path may be extended towards the boundary of the first map data. For example, extending the first predicted path to the boundary of the map data may be based on the first (already) predicted path and/or the current position of the vehicle and/or the first map data.

The first predicted path may be extended such that an end point of the extended first predicted path is located at the boundary of the first map data (or located at a distance from the boundary of the map data that is less than the predefined threshold/minimum distance), e.g., the end point of the extended first predicted path may be located in an outermost region of the first map data. Specifically, the first predicted path may be extended such that the extended first predicted path comprises a further path that the vehicle is expected most likely to follow during drive without route-guidance (or during the possible drive deviating from a route guidance). Extending the first predicted path to the boundary of the first map data may comprise determining a predicted path extending between the end point of the first predicted path and the boundary of the first map data, e.g., determining the predicted path based on essentially the same method used for determining the first predicted path.

In some embodiments, determining the first predicted path may comprise determining the first predicted path such that the first predicted path extends to the boundary of the first map data, e.g., the first predicted path may not be of a predetermined length. In particular, the length, may be such that the first predicted path extends to the boundary of the first map data (or to within a predetermined threshold/minimum distance from the boundary of the first map data).

Extending the first predicted path towards the boundary of the first map data ensures an optimal utilization of the first map data. In other words, extending the first predicted path towards the boundary of the first map data allows for obtaining the longest predicted path possible given the first map data. In addition, extending the first map data towards the boundary, e.g., the end point of the first (extended) predicted path is located in a vicinity of the boundary of the first map data, allows for determining the indication of the further trajectory based on a path and/or end point close to the boundary, thereby enhancing the quality of the predictive value of the indication. Therefore, extending the first predicted path towards the boundary of the first map data optimizes the extrapolation of future map data needs of client navigation applications and thereby the network data usage overhead.

Generally, determining the indication may be based on an end point of the first predicted path. In addition, or alternatively, determining the indication may be based on an orientation at the end point of the first predicted path.

Determining the indication based on the end point of the first predicted path may comprise that the indication of the further trajectory originates at the end point of the first predicted path. In addition, or alternatively, determining the indication based on the end point may comprise that the determination at least partially depends on properties, e.g., geometric properties, associated with the end point and/or the first predicted path within a vicinity of the end point. For example, determining the indication based on the end point may comprise taking into account a probability and/or uncertainty associated with the end point. In addition, or alternatively, determining the indication based on the end point may comprise determining the indication based on an orientation associated with the end point of the first predicted path. For example, the orientation may comprise a tangent vector associated with the geometry at the end point of the first predicted path. The tangent vector associated with the end point may comprise a tangent vector evaluated at the end point. In addition, or alternatively, the tangent vector may comprise a tangent vector associated with a geometry in the vicinity of the end point, e.g., the tangent vector may be an averaged tangent vector along a section of the first predicted path. In particular, the averaged tangent vector may comprise integrating tangent vectors associated with the first predicted path along the section of the first predicted path associated with the vicinity of the end point.

Determining the indication based on the end point of the first predicted path, particularly based on the orientation at the end point, enhances the quality of the predictive value of the indication of the further trajectory and thereby contributes to the optimization of selective pre-fetching.

Obtaining the second map data may comprise prefetching the second map data comprising the at least one map tile. In particular, prefetching the second map data may comprise prefetching the second map data from a server and/or a cloud storage.

For example, the second map data may be prefetched based on the indication of the further trajectory and/or the current position of the vehicle and/or the first predicted path and/or the first map data. For example, prefetching of the second map data from the server and/or cloud storage may be based on a request, e.g., request transmitted from the vehicle to the server and/or the cloud storage. In particular, based on the request the server and/or the cloud storage may provide the second map data.

Obtaining the second map data by prefetching the at least one second map tile from a server and/or cloud storage based on the indication contributes to the selectively obtaining of the map data most likely to be relevant for client navigation applications, while minimizing the unnecessarily obtained map data.

In some embodiments, determining the indication of the further trajectory of the vehicle may be based on extrapolating the first predicted path beyond the first map data.

The indication of the further trajectory may comprise an indication of a (future) driving direction and or path of the vehicle, extending beyond the (available) first map data. Specifically, determining the further trajectory may be based on extrapolating the first predicted path beyond the first map data. For example, the indication may be extrapolated from the end point of the first predicted path, e.g., an end point in a vicinity of the boundary of the first map data. In other words, extrapolating the first predicted path may comprise estimating the (future) path of the vehicle going beyond the first map data, e.g., beyond the (yet) available map data. Extrapolating the first predicted path may be further based on a direction at the end point of the first predicted path.

Extrapolating the first predicted path beyond the first map data allows for obtaining an indication of the further trajectory of the vehicle going beyond the first map data. In particular, extrapolating the first predicted path contributes to an indication with a high predictive value, thereby optimizing the prefetched map data.

Generally, the method may further comprise obtaining a second predicted path, based on the first predicted path and the second map data. For example, the second predicted path may extend the first predicted path such that at least a portion of the second predicted path is located within the second map data. Thus, a longer "horizon" may be obtained, based on the combination of the first and second map data, while minimizing the unnecessary map data obtained.

For example, after the second map data has been obtained, e.g., by prefetching the second map data from a server and/or cloud storage, a second predicted path may be obtained. Specifically, obtaining the second predicted path may comprise determining the second predicted path based on the first map data and/or second map data and/or the current position of the vehicle and/or the first predicted path. In general, the second predicted path may extend the first predicted path such that at least a portion of the second predicted path is located within the second map data. It is noted that the second predicted path may be extended using all the available map data, in this case the union of the first and the second map data - depending on the road network, it could be that it is determined, based on the second map data, that the most likely path for the vehicle path to follow returns to the area covered by the first map data. The second predicted path may originate at the end point of the first predicted path such that an end point of the second predicted path is located within a map tile of the available map data. In particular, the second predicted path may extend the first predicted path such as to form a connected predicted path originating at the current position of the vehicle and ending at the end point of the second path.

Specifically, the second predicted path may comprise a path extending from the end point of the first predicted path, e.g., the second predicted path may not fully comprise the first predicted path. In other words, determining the second predicted path may comprise determining the second predicted path only for the path segment starting from the endpoint of the first predicted path and an (intended) end point of the second predicted path within the available map data. In some embodiments, the second predicted path may be determined such as to extend towards a boundary of the available map data. For example, the end point of the second predicted path may be located in a vicinity of the boundary of the available map data.

In addition, or alternatively, the second predicted path may comprise the first predicted path, e.g., determining the second predicted path may comprise determining a path extending between the current position of the vehicle and an end point of the path. In other words, determining the second predicted path may comprise to determine a (new) predicted path between the current position and an (intended) end point of the second predicted path within the available map data. Generally, the second predicted path may be determined by essentially the same procedure and/or mechanism as used for the determination of the first predicted path.

Specifically, the second predicted path comprise a path that the vehicle is most likely to follow during the drive without route-guidance, or the most likely sub-path that the vehicle is most likely to take if deviating from a route-guidance. For example, the second predicted path may comprise a path that the vehicle is most likely to follow between the end point of the first predicted path and the (intended) end point of the second predicted path. In addition, or alternatively, the second predicted path may comprise a path that the vehicle is most likely to follow between the current position of the vehicle and the (intended) end point of the second predicted path with in the second map data.

Obtaining the second predicted path based on the first predicted path and the second map data allows for obtaining a path that the vehicle is most likely to follow within the available map data. Therefore, obtaining the second predicted path allows for extending the path of the vehicle beyond the first map data to the second map data and thereby enables the prediction of the path for future drive of the vehicle. Thus, client navigation applications can produce their respective output essentially independent of the availability of online connectivity at least within the range of the second predicted path.

In particular, in some cases, the combination of the first map data and the obtained second map data may be sufficient to obtain a second predicted path which is long enough to satisfy all (current) requirements of various client navigation applications, and perhaps even to ensure at least some latency. This may be the case if the client navigation applications require information only for a relatively short distance ahead of the vehicle and/or if the indication is selected to cover a relatively significant area of the map.

In some cases, however, the combination of the first map data and the obtained second map data may not sufficient be for all client navigation applications, and/or may not provide sufficient robustness. In such cases, it could be considered to obtain additional map data based on the initial indication of the further trajectory of the vehicle. However, a more selective approach makes an advantage of the obtained second map data.

Specifically, the method may further comprise determining, based on the second map data and the second predicted path, a second indication of a further trajectory of the vehicle. In addition, the method may further comprise obtaining, based on the second indication, third map data comprising at least one third map tile.

For example, determining based on the second data and the second predicted path a second indication may comprise extrapolating the second predicted path beyond the available map data. In addition, or alternatively, determining the second indication may further comprise extending the second predicted path towards the boundary of the available map data. Specifically, determining the second indication may be based on the end point of the second predicted path, and may additionally be based on an orientation of the end point of the second predicted path. Generally, determining the second indication may be based on essentially the same mechanism and/or procedure as determining the first indication. In other words, determining the second indication may comprise treating the union of first and second map data as first map data and treating the second predicted path (or a union of the first and second precited path) as a first predicted path.

In addition, based on the second indication, third map data comprising at least one third map tile may be obtained. The third map data may comprise map data extending beyond the first and the second map data. For example, the third map data may at least partially connect to the first and/or second map data. In particular, at least one of the third map tiles may connected at least partially to one of the first map tiles and/or one of the second map tiles. Specifically, obtaining third map data may comprise prefetching third map data from a server and/or a cloud storage. For example, the server and/or cloud storage may comprise the server and/or cloud server from which the first and/or second map data has been prefetched. Generally, the third map data may be obtained by the same mechanism and/or procedure as the obtaining the second map data. In other words, obtaining the third map data may comprise treating the second indication as a first indication.

Determining the second indication of a further trajectory and obtaining, based on the second indication, third map data allows for further extrapolating future map data needs of the client navigation applications, thereby obtaining further map data likely to be relevant, and optionally further contributing to a higher robustness to temporary network connectivity loss and to the minimization of latency times of the client navigation applications. In addition, by obtaining the third map data based on the second indication, i.e., an indication of high predictive value, network data usage is minimized.

Generally, after obtaining the third map data, the second predicted path, e.g., the path within the second map data, may be even further extended using the third map data. In particular, based on the third map data (in combination, if needed, with the other already available map data) and the first and/or second predicted path a third predicted path may be obtained, e.g., determined, ranging at least over a part of the third map data. The third predicted path may be obtained, e.g., determined, by essentially the same mechanism and/or process by which the first and/or second predicted paths have been determined. However, it is clear that this procedure can be arbitrarily iterated, e.g., by treating the recent map data and/or recent predicted path and/or recent indication as the respective predecessor and applying the above-described method.

In other words, the computer-implemented method may comprise a sequence of operations (i) and (ii) that are performed in alternating iterations. In particular, the operation (i) may comprise obtaining the N^{th} predicted path based on the (N-1)^{th} predicted path and the N^{th} map data. The operation (i) may further comprise determining, based on the N^{th} map data and the N^{th} predicted path, an indication of the N^{th} further trajectory. In addition, the operation (ii) may comprise obtaining, based on the indication and the N^{th} trajectory, (N+1)^{th} map data comprising at least one (N+1)^{th} map tile.

Using this iterative approach, as compared for instance to a technique where a larger quantity of second map data is obtained in a single iteration, makes it possible to be more precise in obtaining further map data by taking advantage of the successively obtained new map information.

Determining the indication of the N^{th} further trajectory and obtaining, based on the indication of the N^{th} further trajectory, (N+1)^{th} map data comprising at least one (N+1)^{th} map tile allows for further extrapolating future map data needs of the client navigation applications. By obtaining the (N+1)^{th} map data based on the N^{th} indication, i.e., an indication of high predictive value, network data usage is further optimized. In addition, this may contribute to higher robustness to temporary network connectivity loss and to the minimization of latency times of the client navigation applications.

Specifically, the alternating iteration may terminate with obtaining the N^{th} predicted path. Alternatively, the alternating iteration may terminate with obtaining the (N+1)^{th} map data.

For example, after obtaining the N^{th} map data and after obtaining, based on the N^{th} map data, the N^{th} predicted path the alternating iteration may terminate, e.g., the iteration finishes. In addition, or alternatively, the alternating iteration may terminate with obtaining the N^{th} predicted path and a subsequent extension of the N^{th} predicted path towards a boundary of the N^{th} map data. Terminating with obtaining the N^{th} predicted path ensures that the (future) path of the vehicle is predicted for the largest possible range for which map data is available, thereby contributing to an efficient utilization of the available map data.

In some embodiments, the alternating iteration may terminate with obtaining the (N+1)^{th} map data. For example, the (N+1)^{th} map data may be obtained and no subsequent obtaining, e.g., determining, of a (N+1)^{th} predicted path may be performed. In particular, obtaining, e.g., determining, of a (N+1)^{th} predicted path may be performed at a later time independent of the alternating iteration, e.g., when the N^{th} predicted path comprises the actual future path of the vehicle. For example obtaining, e.g., determining, of a (N+1)^{th} predicted path, may be performed when the vehicle advances along the 1^{st} through Nth predicted path, for instance as the distance between the current position of the vehicle and an end point of the N^{th} predicted path drops below a desired length and/or expected travel time.

Terminating the alternating iteration with obtaining the (N+1)^{th} map data may reduce possible computation costs associated with the (N+1)^{th} predicted path, e.g., computation costs for determining the (N+1)^{th} predicted path.

Generally, the termination of the alternating iteration may be based on a travel time of the vehicle with respect to the current position of the vehicle and an end point of the N^{th} path. Specifically, the travel time may be based on a current and/or average and/or expected speed of the vehicle. In addition, or alternatively, the termination of the alternating iteration may be based on a distance between the current position of the vehicle and an end point of the N^{th} path. For example, the distance may comprise a length along the predicted N paths. In addition, or alternatively, the termination of the alternating iteration may be based on a data size of the obtained map data and/or the map data including the N^{th} map data and/or the (N+1)^{th} map data.

In some embodiments, the travel time may comprise a predefined travel time. In addition, or alternatively, the distance may comprise a predefined distance.

In addition, or alternatively, the termination of the alternating iteration may be based on a target network connectivity loss tolerance. For example, a target network connectivity tolerance may comprise an amount of map data such that a connectivity loss of a certain duration and/or in a certain area does not affect or impede the output of the client navigation application. Specifically, based on the target network connectivity tolerance, a corresponding travel time and/or a corresponding distance and/or a corresponding data size may be determined. In particular, the determined travel time and/or distance and/or data size may serve as a termination criterium for the alternating iteration.

In general, determining the indication may be further based on a geometry of the first predicted path within a vicinity of an end point of the first predicted path. In addition, or alternatively, determining the indication may be further based on a curvature along the first predicted path within the vicinity of the end point of the first predicted path. In addition, or alternatively, determining the indication may be further based on a distance and/or direction between the current position of the vehicle and the end point of the first predicted path. In addition, or alternatively, determining the indication may be further based on a functional road class at the end point of the first predicted path. In addition, or alternatively, determining the indication may be further based on a current and/or an averaged and/or an expected velocity of the vehicle.

Generally, it should be understood that the above-described dependencies for determining the (first) indication based on the first predicted path analogously apply for determining the N^{th} indication within the alternating iteration. In particular, determining the N^{th} indication may be further based on a geometry of the N^{th} predicted path within a vicinity of an end point of the N^{th} predicted path. Specifically, the geometry of the N^{th} predicted path may comprise a geometry of a union of the N^{th} predicted path and *k* ≤ *N* of the previous paths. In addition, or alternatively, determining the N^{th} indication may be further based on a curvature of the N^{th} predicted path within the vicinity of the end point of the N^{th} predicted path. In particular, determining the N^{th} indication may be further based on a curvature of the N^{th} predicted path within a vicinity of an end point of the N^{th} predicted path. In addition, or alternatively, determining the N^{th} indication may be based on a distance and/or direction between the current position of the vehicle and the end point of the N^{th} predicted path. For example, the distance between the current position and the end point of the N^{th} predicted path may comprise a length of a path between the current position and the end point of the N^{th} predicted path comprising at least a part of the k^{th} previously predicted paths for *k* ≤ *N.* In addition, or alternatively, determining the N^{th} indication may be based on a functional road class at the end point of the N^{th} predicted path. In addition, or alternatively, determining the N^{th} indication may be based on a current and/or averaged and/or expected velocity of the vehicle.

The geometry of the first predicted path may refer to any geometric property that may be attributed to the first predicted path. For example, when the map data comprises three-dimensional map data, the geometry may comprise a torsion of the first predicted path. The curvature of the first predicted path may comprise any deviation of the first predicted path from a straight line. Generally, the curvature of the first predicted path may comprise a derivative of the first predicted path, e.g., a first and/or second and/or higher derivative of the first predicted path. In addition, or alternatively, the curvature may comprise an averaged curvature of the first predicted path, e.g., a curvature averaged along a section of the first predicted path, particularly a section within a vicinity of the end point of the first predicted path.

In addition, or alternatively, determining the indication may be based on the distance and/or direction between the current position of the vehicle and the end point of the first predicted path. For example, the distance may comprise a length of a straight line connecting the current position and the end point of the first predicted path. In addition, or alternatively, the distance may comprise a length of the first predicted path between the current position and the end point. Similarly, the direction between the current position of the vehicle and the end point of the first predicted path may comprise a vector extending between the current position and the end point of the first predicted path.

In addition, or alternatively determining the indication may be based on a functional road class at the end point of the first predicted path. For example, the functional road class may comprise a classification of the functionality of the road, e.g., a road associated with the end point of the first predicted path. Specifically, the functional road class may comprise an arterial road class and/or a collector road class and/or a local road class. For example, an arterial road class may be associated to roads providing a fast travel and/or comprise a low accessibility from neighbouring roads. In particular, arterial roads may be designed for long-distance travel, e.g., interstates and/or highways. Similarly, a collector road may comprise a road providing a connection between local roads and arterial roads. For example, collector roads may provide a balance between access and mobility. Similarly, local roads may comprise roads for slow travel. In particular, local roads may comprise roads with a high accessibility and/or are connected to collector and arterial roads, e.g., local roads may be typically not used for through traffic.

In addition, or alternatively, determining the indication may be based on a current and/or averaged and/or expected velocity of the vehicle. For example, the current velocity may comprise a velocity of the vehicle at the time when the indication is determined. The averaged velocity may comprise a velocity of the vehicle within a certain time interval and/or with respect to a certain path, e.g., an average velocity of the vehicle within a distance already covered. For example, the averaged velocity may comprise an arithmetic mean and/or a median or any other suitable statistical mean value. The expected velocity may comprise an extrapolated velocity, e.g., based on previously parameters of the travel, e.g., previously velocities and/or a road class and/or a driving behaviour of the driver of the vehicle. The expected velocity may be based on a statistical/historical speed at a location or along a stretch on the path, which may be included in the map data.

Determining the indication based on a geometry and/or a curvature and/or a distance and/or a direction and/or a functional class road and/or a velocity allows for optimizing the determination of the indication and thereby contributed to the predictive value of the indication. In particular, an indication depending on at least one of the above-described properties allows for taking into account an actual and individual driving situation and thus enables the adaption of the indication to the specific situation of the specific travel. Consequently, future map data needs can be extrapolated with a higher accuracy.

Generally, obtaining the second map data may comprise obtaining second map tiles intersecting with the indication. In addition, or alternatively, obtaining the second map data may comprise obtaining second map tiles, wherein at least one second map tile is located adjacent to at least one of the first map tile.

For example, when the indication comprises an area and/or a volume, the second map data may comprise map tiles such that an area associated with the map tiles intersects with the indication. For example, intersecting with the indication may comprise that the indication and the second map tile are at least partially associated with the same geographic area. In some embodiments, obtaining the second map data may comprise identifying the second map data, and in particular the map tiles forming the second map data, based on the indication, and transmitting a request to a server and/or cloud storage comprising an identification of requested map data, particularly map tiles. This identification may for instance consist of latitude/longitude coordinates for the map tiles, and/or an identifier for the map tiles. The request may comprise at least partially the indication. In addition, the request may comprise the end point of the first predicted path, e.g., the end point may serve as a space point for a vector associated with the indication. Specifically, the server and/or the cloud storage may determine the second map data at least partially based on the indication. Generally, the server and/or cloud service may have access to map data beyond the first map data, e.g., map data of a large region comprising the first map data, preferably map data of a province comprising the first map data, more preferably map data of a country associated with the first map data, most preferably map data of multiple countries. In particular, the server and/or the cloud storage may determine map tiles intersecting with the indication. For example, the server and/or cloud storge may determine the map tiles intersecting with the indication such that the map tiles are disjoint with the first map data.

Obtaining the second map tiles such that the second map tiles intersect with the indication allows for obtaining the second map tiles based on the indication and simplifies the computation of second map tiles. Therefore, obtaining second map tiles intersecting the indication reduces computational costs and optimizes the extrapolation of future map data needs.

In addition, or alternatively, the second map tiles may be obtained such that at least one second map tile is located adjacent to at least one of the first map tiles. Being located adjacent to at least one first map tile may comprise that at least one second map tile and at least one first map tile share a common boundary. For example, the at least one second map tile may be located such as to be adjacent to the first map tile comprising the end point of the first predicted path and/or the end point of the extended first predicted path.

Obtaining the second map tiles such that at least one second map tile is located adjacent to at least one of the first map tiles ensures that the second predicted path can continuously extend the first predicted path, e.g., avoids a hole in the union of the first and second map data. Thus, obtaining the second map tiles such that at least one second map tile is located adjacent to at least one of the first map tiles may contribute to the robustness to temporary network connectivity loss and thereby may minimize the latency and network data usage.

In some embodiments, determining at least part of the first predicted path may be based on requests of at least one client of a plurality of clients of the vehicle. For example, the at least one client may comprise an advanced driver assistance system. In addition, or alternatively, the at least one client may comprise a user interface. In some embodiments, at least one client may comprise a basic navigation system, e.g., a map matching client.

The request of a client may comprise at least one property demand associated with the first predicted path. For example, the request may comprise a minimal length of the (total) predicted path. In particular, the total length of the path may refer to a length of the path after the alternating iteration has terminated. In other words, the alternating iteration may terminate when the length between the end point of the N^{th} predicted path and the current position along the sequence of the already predicted paths fulfils the minimal length demand within the request. In addition, or alternatively, the request may comprise a (total) distance demand and/or a (total) travel time demand. For example, the total distance demand may comprise a minimal distance between the current position of the vehicle and the end point of the N^{th} predicted path within the alternating iteration. In particular, the distance may comprise a length along the path, or a length of a straight line connecting the current position of the vehicle and the end point of the N^{th} predicted path. Specifically, the alternating iteration may terminate when the distance between the current position and the end point of the N^{th} predicted path exceeds the minimal distance. Similarly, the travel time demand may comprise a minimal travel time of the vehicle for which the availability of map data can be ensured. In particular, the alternating iteration may terminate when the travel time of the vehicle between the end point of the N^{th} predicted path and the current position of the vehicle along the previously obtained predicted paths exceeds the minimal travel time demand. For example, the travel time of the vehicle between the end point of the N^{th} predicted path and the current position of the vehicle along the previously obtained predicted paths may further depend on a current and/or average and/or expected velocity of the vehicle and/or the functional road class associated with the N^{th} predicted path and/or the k^{th} predicted path for *k* ≤ *N.*

Specifically, determining at least part of the first predicted path may be based on a requested length of the first predicted path. For example, determining at least part of the first predicted path may be based on a maximum requested length of the first predicted path among the plurality of clients of the vehicle.

Determining the predicted path(s) based on requests of a plurality of clients of the vehicle, e.g., a request-based termination condition of the alternating iteration, allows for adapting the (total) predicted path to the specific needs and/or requirements of the individual clients. In particular, adapting the (total) predicted path to the specific needs and/or requirements of the individual clients allows for ensuring the availability of sufficient map data while at the same time reducing computational and/or network data costs, e.g., prefetching necessary (requested) map data but not more. Therefore, determining the predicted path(s) based on requests of a plurality of clients of the vehicle contributes to an optimal utilization of network and computational resources, thereby maximizing the customer satisfaction.

In addition, by adding a predefined and/or configurable buffer distance (or travel time) to a maximum requested length (or travel time), robustness against temporary network connectivity loss can be provided.

In general, determining the first predicted path may comprise determining at least one sub-path branching off the first predicted path based on the first map data.

For example, the sub-path may branch off the first predicted path at a node of the road network. In particular, the sub-path may comprise a path associated with a lower probability than the arc originating at the node comprised in the first predicted path, e.g., the most probable path. Specifically, the sub-path branching off the node of the road network may be associated with an arc connected to the node associated with the second largest probability. For example, every arc and/or sub-path originating at the node may be associated to a respective probability. In general, the probability assignment may be such that the sum over the probabilities associated to every arc originating from a same node is equal to one. Specifically, determining at least one sub-path branching off the first predicted path may comprise determining sub-paths such that the probability of the respective sub-path is larger than a given probability threshold.

For example, a request of the at least one client may comprise a probability demand, e.g., a probability threshold. In particular, determining a sub-path branching off the first predicted path may comprise determining a second most likely path for the vehicle within the available map data. For example, the length of a sub-path, e.g., the second most likely path, may be based on a probability associated with the end point of the sub-path. In addition, or alternatively, the length of the sub-path may be based on a minimal requested length of the sub-path and/or a requested travel time associated with the sub-path.

In addition, determining the first predicted path may further comprise determining at least one higher-order sub-path, e.g., a sub-path branching off a sub-path. For example, at a node within the sub-path branching off the first predicted path, the sub-path itself may split into at least two branches. In addition, at least one of the at least to branches of the sub-path may split into one or more branches at a node within one of the at least two branches of the sub-path. In general, sub-paths may split into at least two branches at any node within the sub-path and any sub-path may again split into higher-order sub-paths. In other words, splitting into sub-paths may define a recursive process, e.g., from any node of the first (N^{th}) predicted path, a sub-network of paths may unfold.

Generally, determining the N^{th} predicted path in the alternating iteration may comprise determining at least one sub-path branching off the N^{th} predicted path based on the N^{th} map data and/or the subsequently determined predicted paths and/or sub-paths within the k^{th} iteration for *k* ≤ *N.*

Specifically, the method may further comprise determining, based on at least one sub-path, a further indication of a potential further trajectory of the vehicle. In addition, the method may further comprise obtaining, based on the further indication, further second map data comprising at least one further second map tile.

In other words, the sub-paths branching off the first (N^{th}) predicted path and/or the higher-order sub-paths may be at least partially treated as a (first) predicted path. For example, for at least one of the sub-paths, e.g., for an associated end point, an indication for a further trajectory may be determined. Specifically, the further indication of a potential further trajectory associated with a particular sub-path may be obtained by essentially the same mechanism and/or procedure as for obtaining the indication associated with the first (N^{th}) predicted path. In particular, for each sub-path the further indication may be obtained, e.g., determined, independently. In other words, the parameters for determining the indication may be adjusted independently for each of the sub-paths.

For example, a first indication of a further trajectory for a first sub-path may be determined according to a first set of parameters and a second indication of a further trajectory for a second sub-path may be determined according to a second set of parameters. Specifically, the set of parameters according to which the indication of the further trajectory is determined may comprise a geometry of the sub-path within a vicinity of an end point of the sub-path and/or a curvature along the sub-path within the vicinity of the end point of the sub-path and/or a distance between the current position of the vehicle and the end point of the sub-path and/or a direction between the current position of the vehicle and the end point of the sub-path and/or a functional road class at the end point of the sub-path.

Specifically, obtaining the second path may comprise obtaining at least one second sub-path branching off the second predicted path. In particular, determining the second indication may be based on the at least second one sub-path. On addition, or alternatively, obtaining third map data may be based on the at least one second sub-path.

Obtaining the first (N^{th}) predicted path such as to comprise at least one sub-path branching off the first (N^{th}) predicted path allows for taking into account the event that the vehicle does not follow the first (N^{th}) predicted path during driving, e.g., the vehicle deviates from the path that the vehicle is expected most likely to follow. Therefore, obtaining the first (N^{th}) predicted path such as to comprise at least one sub-path branching off the first (N^{th}) predicted path enhances the extrapolation of future map data needs of the client navigation applications, thereby maximizing the robustness to temporary network connectivity loss, minimizing the latency and network data usage and hence optimizing the customer satisfaction.

A second aspect is directed to a system comprising at least one processing unit configured to perform the above-described method.

A third aspect relates computer program comprising instructions which, when the program is executed by a computer, cause the computer to carry out the above-described method.

A fourth aspect is directed to a vehicle comprising the above-described system and/or a computer to execute the above-described computer program.

Whether aspects are implemented as hardware or software means depends upon the particular application and design constraints imposed on the overall system. By way of example, an element, or any portion of an element, or any combination of elements may be implemented as a processing system that may include one or more processors. Examples of processors include microprocessors, microcontrollers, graphics processing units (GPUs), central processing units (CPUs), application processors, digital signal processors (DSPs), reduced instruction set computing (RISC) processors, systems on a chip (SoC), baseband processors, field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software components, applications, software applications, software packages, routines, subroutines, objects, executables, threads of execution, procedures, functions, etc., whether referred to as software, firmware, middleware, microcode, hardware description language, or otherwise.

Accordingly, in one or more exemplary embodiments, the functions described may be implemented in hardware, software, or any combination thereof. If implemented in software, the functions may be stored on or encoded as one or more instructions or code on a computer-readable medium. Computer-readable media includes computer storage media. Storage media may be any available media that can be accessed by a computer. By way of example, and not limitation, such computer-readable media can comprise a random-access memory (RAM), a read-only memory (ROM), an electrically erasable programmable ROM (EEPROM), optical disk storage, magnetic disk storage, other magnetic storage devices, combinations of the aforementioned types of computer-readable media, or any other medium that can be used to store computer executable code in the form of instructions or data structures that can be accessed by a computer.

It is noted that any combination of features that have been described above as belonging to certain embodiments/aspects of the present invention is also an embodiment of the present invention, provided such a feature combination is feasible, i.e., does not lead to any contradictions.

### Short description of the figures

In the following, exemplary embodiments of the invention are described with reference to the following figures:
- **Fig. 1A:**: Illustration of an exemplary embodiment of the method for prefetching map data, wherein the end point of the first predicted path is located within the first map data;
- **Fig. 1B:**: Illustration of an exemplary embodiment of the method for prefetching map data, wherein the first predicted path extends towards a boundary of the first map data;
- **Fig. 2A:**: Illustration of an exemplary embodiment of the method for prefetching map data, wherein the indication comprises a circle geometry;
- **Fig. 2B:**: Illustration of an exemplary embodiment of the method for prefetching map data, wherein the second predicted path extends beyond the first map data and third map data is prefetched;
- **Fig. 2C:**: Illustration of an exemplary embodiment of the method for prefetching map data, wherein a third predict path comprising a sub-path runs via a part of the third predicted path;
- **Fig. 3:**: Schematic illustration of a computer-implemented method for prefetching map data during a drive of a vehicle according to the present invention.

### Detailed description of preferred embodiments

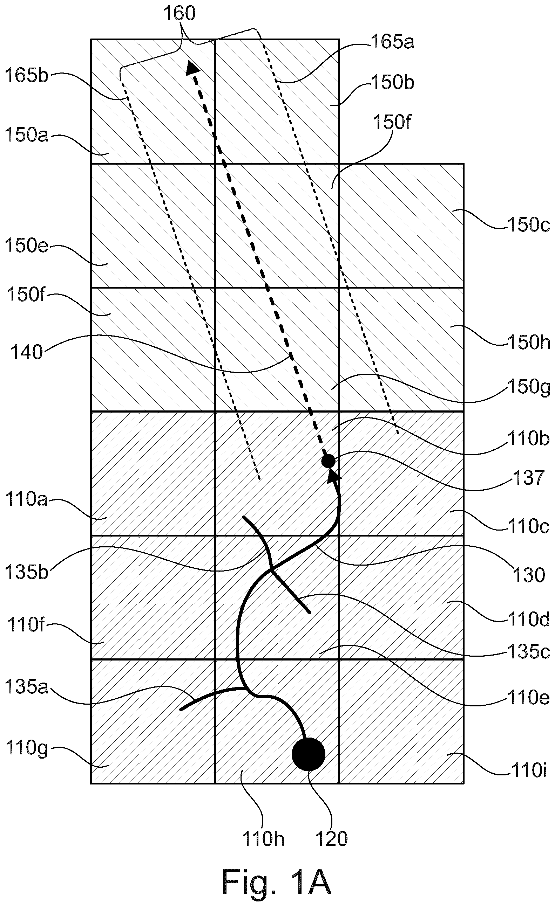

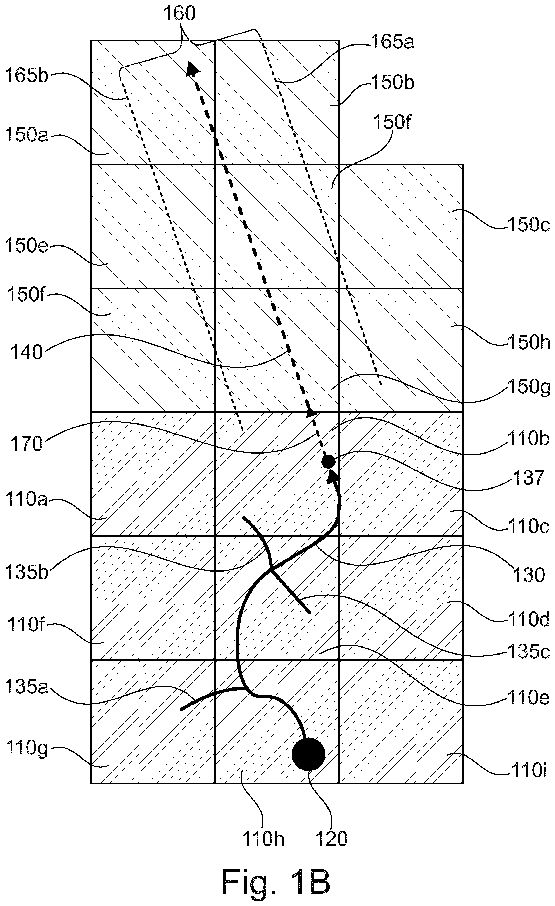

Figures 1A and 1B illustrate an exemplary embodiment of the method for prefetching map data. Initially (Fig. 1A), first map data 110 comprising first map tiles 110a-110i is available, e.g., accessible, for the vehicle. The first map tiles 110a-110i comprise square map tiles of the same size and are located adjacent to each other. In addition, the map first map data 110, e.g., the first map tiles 110a-110i, comprises at least part of a route network (not shown) associated with the geographic area covered by the first map data 110. In some embodiments, the map tiles may comprise a different geometry and/or the different map tiles may comprise a different size.

The first map data 110 comprising the first map tiles 110a-110i is obtained such as to comprise a current position 120 of the vehicle. For example, the current position 120 of the vehicle may be based on a sensor, e.g., a GPS sensor. In particular, the current position 120 of the vehicle is located within the first map tile 110h.

Based on the first map data 110 comprising the first map tiles 110a-110i and the current position 120 of the vehicle a first predicted path 130 is determined. The first predicted path 130 originates at the current position 120 of the vehicle and terminates at an end point 137. The end point 137 of the first predicted path 130 is located within the map tile 110b. In particular, the end point 137 of the first predicted path 130 is distant from a boundary of the map tile 110b. The first predicted path 130 comprises a curved path running over the map tiles 110h, 110e, 110c and 110b. In addition, the first predicted path 130 comprises sub-paths 135a, 135b, 135c branching off the first predicted path 130. For example, the first predicted path 130 may comprise a path that the vehicle is expected most likely to follow during the drive. In addition, the sub-paths 135a, 135b, 135c may comprise paths that are associated with a lower probability than the first predicted path 130. Generally, from each of the sub-paths 135a, 135b, 135c further sub-paths of higher order may branch off.

In some embodiments (Fig. 1A), based on the first map data 110 comprising first map tiles 110a-110i and the first predicted path 130, an indication 140 of a further trajectory is determined. The indication 140 of the further trajectory comprises a direction/vector originating at the end point 137 of the first predicted path 130. In particular, as the end point 137 of the first predicted path 130 is located within the first map tile 110b and separated from the boundary of the first map tile 110b, a portion of the vector of the indication 140 is located within the first map tile 110b and extends beyond the first map tile 110b. Specifically, the indication 140 of the further trajectory of the vehicle may extrapolate the first predicted path 130 beyond the first map data 110. The indication 140 further comprises a corridor 160 associated with a corresponding corridor width. For example, the corridor is bounded by the limits 165a, 165b. In particular, the limits 165a, 165b are arranged parallel to the direction/vector of the indication 140 as well as symmetric with respect to the direction/vector. In other words, the indication 140, e.g., the corridor 160, may define an area corresponding to a parallelogram. Generally, the indication 140 may comprise a geometry different from a parallelogram. For example, the indication 140 may comprise a rectangle and/or a circle and/or an ellipse and/or a triangle. It may also be considered for the width of the corridor to vary over its length, in particular to gradually grow narrower. Alternately or additionally, the length and/or width of the corridor 160 may be selected depending on the first data, for example selecting a longer, narrower corridor if end point 137 is located on a highway, and a shorter, wider corridor if end point 137 is on a smaller road.

Generally, the indication 140 may be determined based on a geometry of the first predicted path 130. For example, the indication 140 may be determined based in the geometry of the first predicted path 130 within a vicinity of the end point 137. In addition, or alternatively, the indication 140 may be determined based on a curvature of the first predicted path 130, particularly based on the curvature of the first predicted path within a vicinity of the end point 137 of the first predicted path 130. For example, the curvature of the first predicted path may comprise a derivative of the first predicted path 130. Specifically, the derivative of the first predicted path 130 may comprise a first and/or second and/or higher derivative of the first predicted path 130. For example, the vector/direction of the indication may comprise a tangent vector of the first predicted path 130 evaluated at the end point 137. In some embodiments, the indication 140 may be based on a distance and/or direction between the current position 120 of the vehicle and the end point 137 of the first predicted path, e.g., a distance and/or direction defined by a straight line/vector connecting the current position 120 and the end point 137.

It is noted that the indication may at least in part overlap with an area for which map data is not (yet) available, and hence it cannot take into account the road geometry in this area.

Based on the indication 140, second map data 150 comprising second map tiles 150a-150h is obtained. In addition, obtaining second map data 150 may be further based on the first map data 110. For example, the second map data 150 may be prefetched from a server and/or a cloud storage. In particular, the vehicle may transmit to the server and/or cloud storage a request comprising information identifying the second map data, for instance in the form of at least one map data tile identifier. The request may additionally or alternately comprise the indication 140. Generally, the map data may be obtained such as to obtain second map data 150 comprising map tiles 150a-150h intersecting with the indication 140 e.g., the corridor 160. For example, the second map tiles 150a-150h intersect with the corridor 160 defined by the limits 165a, 165b. Specifically, the width of the corridor 160 may define the number and/or the location of second map tiles 150a-150h. In particular, if the corridor 160 would be narrower, second map tile 150c may not be included within the second map data 150.

In addition, or alternatively (Fig. 1B), before determining the indication 140, the first predicted path 130 is extended towards the boundary of the first map data 110. For example, the first predicted path 130 may be extended from the end point 137 towards the boundary of the first map data, e.g., the boundary of the first map tile 110b, by a path segment 170. In particular, the end point of the extended first predicted path, e.g., the union of the first predicted path 130 and the path segment 170, may be located at the boundary of the first map tile 110b. Generally, the first predicted path 130 may be extended towards the boundary of the first map data 110 by the segment 170 such that the extended first predicted path (130 with 170) comprises a path that the vehicle is expected most likely to follow during the drive. Specifically, extending the first predicted path 130 towards the boundary of the first map data 110 may comprise extending the first predicted path 130 such that the segment 170 comprises at least one sub-path.

In general, the indication 140 may be determined based on the extended first predicted path (130 and 170) and the first map data 110. For example, the indication 140 may be determined based on an end point of the extended first predicted path (130 and 170), particularly based on an orientation at the end point of the segment 170.

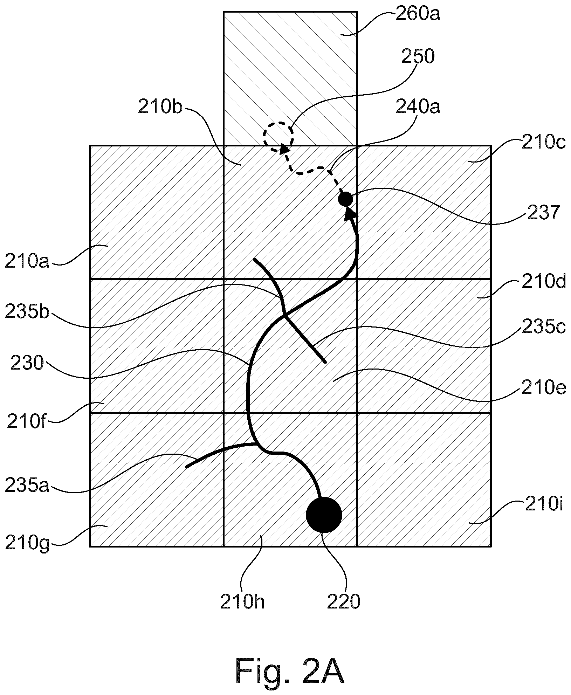

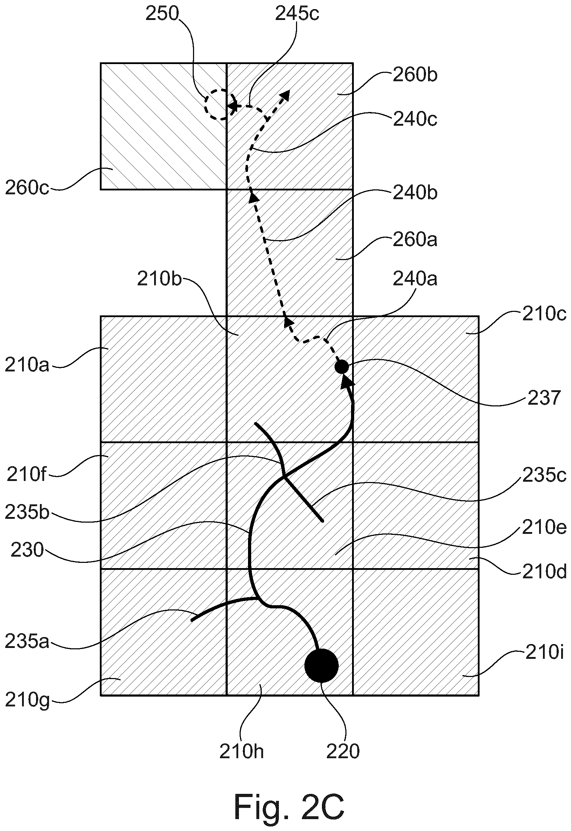

Figures 2A to 2C illustrate a further exemplary embodiment of the method for prefetching map data during a drive of a vehicle. Initially, first map data 210 comprising first map tiles 210a-210i are available, e.g., accessible, at the vehicle. For example, client navigation systems associated with the vehicle may have access to the first map data 210. The first map data 210 is obtained such as to comprise a current position 220 of the vehicle. For example, the current position 220 of the vehicle is located within the first map tile 210h.

Based on the first map data 210 and the current position 220 of the vehicle a first predicted path 230 is determined. The first predicted path 230 may comprise a path that the vehicle is expected most likely to follow during the drive. For example, the first predicted path 230 comprises a curved path running over the map tiles 210h, 210e, 210c and 210b. The first predicted path 230 further comprises sub-paths 235a, 235b, 235c branching off the first predicted path 230. The first predicted path 230 comprises an end point 237. The end point 237 is located within the first map tile 210b. In particular, the end point 237 of the first predicted path 230 is separate from a boundary of the first map data 210, particularly separate from a boundary of the first map tile 210b.

In addition, the first predicted path 230 is extended towards the boundary of the first map data 210. Specifically, the first predicted path 230 is extended towards the boundary of the first map data 210 by the path segment 240a. In particular, the end point (not labelled) of the path segment 240a is located within a vicinity of the boundary of the first map tile 210b. The path segment 240a may be such as to extend the first predicted path 230 from the end point 237 to the boundary of the first map data. Generally, the first predicted path 230 may be extended such by the path segment 240a such that the extended first predicted path (230 and 240a) comprises a path that the vehicle is expected most likely to follow during drive. For example, the first predicted path 230 may be extended such that the path segment 240a comprises at least one sub-path branching off the path segment 240a.

In addition, based on the first map data 210 and the first extended predicted path (230 and 240a) an indication 250 of a further trajectory of the vehicle is determined. For example, the indication 250 comprises a circle geometry. In particular, the circle may comprise a radius such that the circle defines an area. For example, the centre of the circle may be arranged such as to essentially correspond to the end point of the first extended predicted path (230 and 240a). For other geometries of the indication (not depicted in Fig. 2A-2C), the indication 250 may (alternately or additionally) be determined based on a geometry of the extended first predicted path, e.g., within a vicinity of the end point of the extended first predicted path (230 and 240a). In addition, or alternatively, the indication 250 may be determined based on a curvature along the extended first predicted path (230 and 240a) within the vicinity of the end point. Specifically, the geometry and/or the curvature may be at least partially based on a geometry and/or curvature of the path segment 240a. In addition, or alternatively, the indication 250 may be determined based on a distance and/or direction between the current position 220 of the vehicle and the end point of the extended first predicted path (230 and 240a), particularly the end point of the path segment 240a.

In addition, based on the indication 250, second map data 260 comprising one second map tile 260a is obtained. For example, the second map data 260 may be obtained by prefetching the second map data 260 comprising at least one second map tile 260a from a server and/or cloud storage. Specifically, the vehicle may transmit a request for obtaining second map data 260 to the server and/or cloud storage. The request may include information identifying the second map data, for instance in the form of at least one map tile identifier. Alternately or additionally, the request may at least partially comprise the indication 250 of the further trajectory. Generally, the second map data 260 may be obtained such that the second map tiles 260a intersect with the indication 250. For example, the indication 250, e.g., the area of the circle, intersects with a lower portion of the second map tile 260a. In addition, the second map tile 260a is adjacent to the first map tile 210b, e.g., the first map tile 210b and the second map tile 260a share a common boundary.

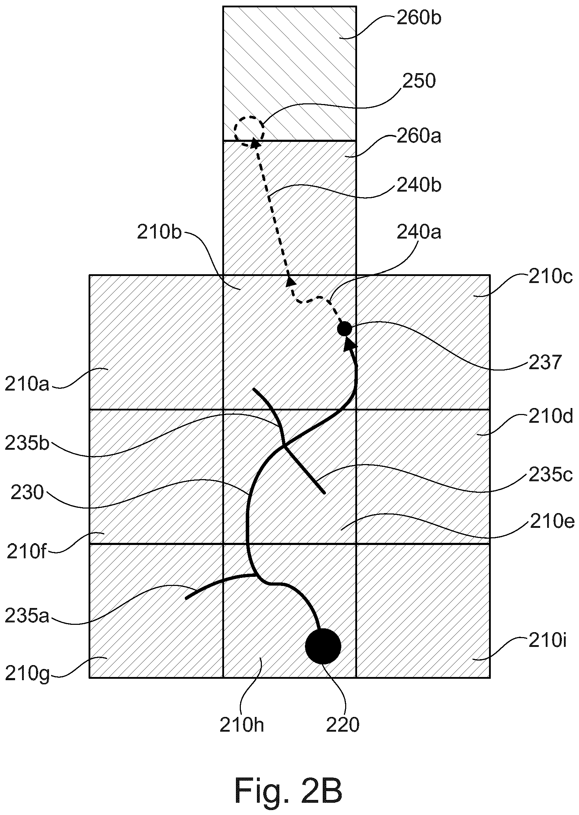

In addition (Fig. 2B), based on the extended first predicted path (230 and 240a) and the second map data 260a a second predicted path 240b is obtained. In particular, the second predicted path 240b extends the extended first predicted path (230 and 240a) such that at least a portion of the second predicted path is located within the second map data 260a. For example, the second predicted path 240b extends the extended first predicted path (230 and 240a) from the end point of the extended first predicted path (230 and 240a) in the vicinity of the boundary of the first map tile 210b over the second map tile 260a towards the boundary of the second map tile 260a. Specifically, the second predicted path 240b may be obtained such that the union of the first predicted path 230, the path section 240a and the second predicted path 240b comprises a path that the vehicle is expected most likely to follow during drive. Generally, the second predicted path 240b may comprise at least one sub-path branching off the second predicted path 240b. In particular, the at least one sub-path may branch off the second predicted path 240b at a node of a road network associated with the second map tile 260a.

In addition, based on the second map data 260a and the second predicted path 240b, a second indication 250 of a further trajectory of the vehicle is determined. The indication 250 may comprise a circle geometry. For example, the indication 250 for the further trajectory may essentially correspond to the indication associated with the first map data 210, e.g., comprising the same geometry and/or size. Alternatively, the indication 250 may differ from the indication associated with the first map data 210. For example, the indication 250 may comprise a smaller or larger radius than the indication associated with the first map data 210. Generally, the indication 250 may be determined based on a geometry of the second predicted path 240b within a vicinity of an end point of the second predicted path 240b and/or a curvature along the second predicted path 240b within the vicinity of the end point of the second predicted path 240b.

In addition, or alternatively, the indication 250 may be determined based on a distance and/or a direction between the current position 220 of the vehicle and the end point of the second predicted path 240b and/or a functional road class at the end point of the second predicted path 240b.

In addition, based on the indication 250 of the further trajectory of the vehicle, third map data 260b comprising at least one third map tile 260b is obtained. For example, the third map data 260b may be obtained by prefetching the third map data 260b comprising at least one third map tile 260b from a server and/or cloud storage. Specifically, the vehicle may transmit a request for obtaining third map data 260b to the server and/or cloud storage. The request may comprise at least one map tile identifier, and/or the indication 250 of the further trajectory. Generally, the third map data 260b may be obtained such that the third map tiles 260b intersect with the indication 250. For example, the indication 250, e.g., the area of the circle, intersects with a lower portion of the third map tile 260b. In addition, the third map tile 260b is adjacent to the second map tile 260a, e.g., the second map tile 260a and the third map tile 260b share a common boundary.

In addition, based on the second predicted path 240b and the third map data 260b, a third predicted path 240c is obtained. The third predicted path 240c extends the second predicted path 240b such that at least a portion of the third predicted path 240c is located within the third map data 260b. Generally, the third predicted path 240c may be obtained such that the union of the first predicted path 230, the path segment 240a, the second predicted path 240b and the third predicted path 240c comprise a path that the vehicle is expected most likely to follow during the drive. Specifically, an end point of the third predicted path 240c is located within the third map tile 260b, e.g., the end point of the third predicted path 240c is separate from a boundary of the third map data 260b. In addition, the third predicted path 240c comprises a sub-path 245c branching off the third predicted path 240c. For example, the sub-path 245c may branch off the third predicted path 240c at a node of the road network associated with the third map tile 260b. Specifically, the sub-path 245c branching off the third predicted path 240c may comprise an end point (not labelled) located in a vicinity of a boundary of the third map tile 260b.

In addition, based on the third map data 260b, the sub-path 245c and/or at least a part of the third predicted path 240c, an indication 250 of a further trajectory of the vehicle may be determined. In particular, the further indication 250 may be associated with the sub-path 245c branching off the third predicted path 240c. In particular, the indication 250 may be determined based on a geometry of the sub-path 245c branching off the third predicted path 240c within a vicinity of the end point of the sub-path 245c and/or a curvature of the sub-path 245c branching off the third predicted path 240c within the vicinity of the end point of the sub-path 245c. In addition, or alternatively, the indication 250 may be determined based on a distance and/or direction between the current position 220 of the vehicle and the end point of the sub-path 245c branching off the third predicted path 240c. In addition, or alternatively, the indication 250 may be determined based on a functional road class at the end point of the sub-path 245c branching off the third predicted path 240c.

In addition, fourth map data 260c comprising at least one fourth map tile 260c is obtained based on the indication 250. For example, the fourth map data 260c may be obtained by prefetching the fourth map data 260c comprising at least one fourth map tile 260c from a server and/or cloud storage. Specifically, the vehicle may transmit a request for obtaining fourth map data 260c to the server and/or cloud storage. For example, the request may at least partially comprise the indication 250 of the further trajectory. Generally, the fourth map data 260c may be obtained such that the fourth map tiles 260c intersect with the indication 250. For example, the indication 250, e.g., the area of the circle, intersects with a right portion of the fourth map tile 260c. In addition, the fourth map tile 260c is adjacent to the third map tile 260b, e.g., the third map tile 260b and the fourth map tile 260c share a common boundary.

Generally, the method for prefetching, e.g., the alternating iteration, may terminate when the length and/or expected travel time of the total predicted path, e.g., the length and/or expected travel time of the union of the first predicted path 230, the path segment 240a, the second predicted path 240b and the third predicted path 240c and/or the sub-path 245c branching off the third predicted path 240c exceeds a requested minimal length and/or expected travel time of the predicted path. For example, the minimal length and/or expected travel time of the predicted path may be requested by at least one client, e.g., a navigation application client, of the vehicle. The minimal length and/or expected travel time may be extended to take additional protection for network connectivity loss into account, thereby increasing robustness and minimizing latency.

It is noted that as the method is performed during a drive of the vehicle, the position 120, 220 of the vehicle is not a constant. Furthermore, as many client navigation applications require information along a path of a minimal length ahead of the vehicle, the path for which information is to be obtained gradually shifts, and map data which is sufficient for addressing the needs of all client navigation applications at a first time may no longer be sufficient at a later time. The skilled person will understand that the method is not performed at a single moment in time, but rather that the method will be performed repeatedly during a drive. In a later iteration, performed at a later time, the "first map data" which is obtained in the initial step may then consist of all map data available at the vehicle at that later time. Furthermore, the skilled person will understand that, while it is possible to repeatedly perform the method *de novo,* it is likely possible to reuse (parts of) the output of at least some steps to make the method more efficient. For example, it may be possible reuse (at least a part of) a previously predicted path (or paths). Additionally, or alternately, it could be considered to check later positions of the vehicle to the predicted paths (or to compare an earlier predicted path to the actually driven route since its determination), to ascertain if the vehicle is following an expected/predicted trajectory. If the vehicle is progressing along the predicted path, at least some of the required map data has already been obtained, and it is further likely that the part of the predicted path that has not yet been traversed is still the most probably path the vehicle will continue to follow. On the other hand, if the vehicle deviates from the predicted path(s), it may be necessary to determine a new predicted path(s) and/or to obtain additional map data.

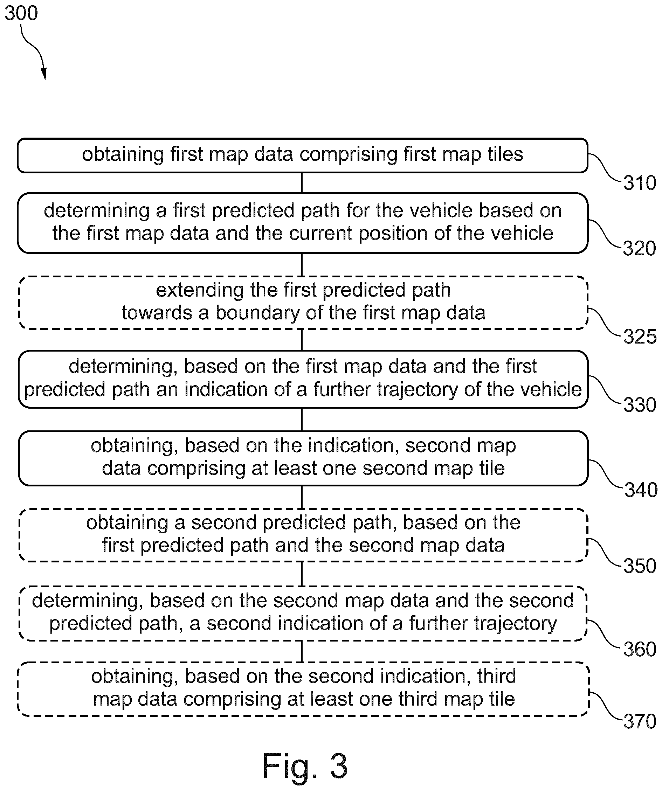

Figure 3 is a schematic illustration of an embodiment of the method 300 for prefetching map data during a drive of a vehicle. The method 300 comprises the step of obtaining 310 first map data comprising first map tiles. The fist map data relates to a geographic area such that the geographic area includes a current position of the vehicle.

The method 300 further comprises the step of determining 320 a first predicted path for the vehicle based on the first map data and the current position of the vehicle.

Optionally, the method may further comprise the step of extending 325 the first predicted path towards a boundary of the first map data.

In addition, the method 300 comprises the step of determining 330, based on the first map data and the (extended) first predicted path, an indication of a further trajectory of the vehicle. For example, determining 330 the indication of the further trajectory may be based on a geometry of the (extended) first predicted path and/or a curvature along the (extended) first predicted path and/or a distance/direction between the current position of the vehicle and the end point of the (extended) first predicted path and/or a functional road class at the end point of the (extended) first predicted path and/or a current and/or averaged and/or expected velocity of the vehicle.

The method 300 further comprises the step of obtaining 340, based on the indication, second map data comprising at least one second map tile. For example, obtaining 340 the second map data may comprise prefetching the second map data from a server and/or a cloud storage. In addition, obtaining 340 the second map data may be based on a request for obtaining the second map data, e.g., a request transmitted from the vehicle to the server and/or cloud storage. In some embodiments, the request may comprise at least one map tile identifier and/or the indication.

Optionally, the method 300 may further comprise obtaining 350 a second predicted path, based on the first predicted path and the second map data. For example, obtaining 350 the second predicted path may comprise determining the second predicted path based on the first predicted path and the second map data. In some embodiments, e.g., when the method 300 comprises extending 325 the first predicted path, obtaining 350 the second predicted path may be based on the extended first predicted path and the second map data.

Furthermore, the method 300 may comprise determining 360, based on the second map data and the second predicted path, a second indication of a further trajectory. In addition, the method 300 may further comprise obtaining 370, based on the second indication, third map data comprising at least one third map tile.

## Claims

1. A computer-implemented method (300) for prefetching map data for a drive of a vehicle without route guidance, the method comprising:
obtaining (310) first map data (110) comprising first map tiles (110a-110i), the first map data (110) relating to a geographic area, the geographic area including a current position (120) of the vehicle;
determining (320) a first predicted path (130) for the vehicle based on the first map data (110) and the current position (120) of the vehicle;
determining (330), based on the first map data (110) and the first predicted path (130), an indication (140) of a further trajectory of the vehicle;
obtaining (340), based on the indication (140), second map data (150) comprising at least one second map tile (150a-150h).

2. The computer-implemented method (300) for prefetching according to claim 1, wherein the first predicted path extends (315) towards a boundary of the first map data.

3. The computer-implemented method (300) for prefetching according to claim 1 or 2, wherein determining (330) the indication (140) is based on an end point (137) of the first predicted path (130) and optionally an orientation at the end point (137) of the first predicted path (130).

4. The computer-implemented method (300) for prefetching according to one of claims 1 to 3, wherein the first predicted path (130) comprises a path that the vehicle is expected most likely to follow during the drive without route-guidance.

5. The computer-implemented method (300) for prefetching according to one of claims 1 to 4, wherein determining (330) the indication (140) of the further trajectory of the vehicle is based on extrapolating the first predicted path (130) beyond the first map data (110).

6. The computer-implemented method (300) for prefetching according to one of claims 1 to 5, further comprising:
obtaining (350) a second predicted path (240b), based on the first predicted path (230) and the second map data (220a),
wherein the second predicted path (240b) extends the first predicted path (230) at least over a part of the second map data (220).

7. The computer-implemented method for prefetching according to claim 6, further comprising:
determining (360), based on the second map data (220) and the second predicted path (240b), a second indication (250) of a further trajectory of the vehicle;
obtaining (370), based on the second indication (250), third map data (220c) comprising at least one third map tile (220c).

8. The computer-implemented method (300) for prefetching according to one of claims 1 to 7, wherein the determining (330, 360) of the indication is further based on at least one of:
a geometry of the first predicted path (130) within a vicinity of an end point (137) of the first predicted path (130);
a curvature along the first predicted path (130) within the vicinity of the end point (137) of the first predicted path (130);
a distance and/or direction between the current position (120) of the vehicle and the end point (137) of the first predicted path (130);
a functional road class at the end point (137) of the first predicted path (130); and
a current and/or an averaged and/or an expected velocity of the vehicle.

9. The computer-implemented method (300) for prefetching according to one of claims 1 to 8, wherein obtaining (340) the second map data comprises at least one of:
obtaining second map tiles intersecting with the indication;
obtaining second map tiles, wherein at least one second map tile is located adjacent to at least one of the first map tile.

10. The computer-implemented method (300) for prefetching according to one of claims 1 to 9, wherein determining (320) at least part of the first predicted path (130) is based on requests of at least one client of a plurality of clients of the vehicle, optionally wherein the at least one client comprises an advanced driver assistance system and/or a user interface.

11. The computer-implemented method (300) for prefetching according to one of claims 1 to 10, wherein determining (320) the first predicted path comprises determining at least one sub-path (135a, 135b, 135c) branching off the first predicted path (130) based on the first map data (110); preferably further comprising:
determining, based on at least one sub-path (235a-235c, 245c), a further indication of a potential further trajectory of the vehicle;
obtaining, based on the further indication, further second map data (220c) comprising at least one further second map tile (220c).

12. The computer-implemented method (300) for prefetching according to claim 11, wherein obtaining the second predicted path (350) comprises obtaining at least one second sub-path (245c) branching off the second predicted path (240c); preferably wherein:
determining (360) the second indication is based on the at least second one sub-path (245c); and/or
obtaining (370) third map data (220c) is based on the at least one second sub-path (245c).

13. A system comprising at least one processing unit configured to perform the method (300) according to any of the previous claims.

14. A computer program comprising instructions which, when the program is executed by a computer, cause the computer to carry out the method of any of claims 1 to 12.

15. A vehicle comprising the system of claim 13 and/or a computer to execute the computer program of claim 14.
